# EUROPÄISCHE PATENTSCHRIFT

(11) **EP 1 361 239 B1**
(45) Veröffentlichungstag und Bekanntmachung des Hinweises auf die Patenterteilung: **23.11.2005**
(21) Anmeldenummer: 03008410.7
(22) Anmeldetag: 11.04.2003
(51) Int. Cl.: C08G 18/66, C08G 18/76

(54) **Verfahren zur Herstellung von Polyurethanhalbhartschaumstoffen**
Process for the preparation of polyurethane semi-rigid foams
Procédé pour la préparation de mousse semi-rigide de polyuréthane

(30) Priorität: 06.05.2002 DE 10220250
(43) Veröffentlichungstag der Anmeldung: 12.11.2003
(73) Patentinhaber: BASF Aktiengesellschaft, 67056 Ludwigshafen (DE)
(72) Erfinder: Partusch, Georg, 86932 Pürgen (DE); Pohl, Wolfgang, Dr., 80797 München (DE); Karcher, Lars, 82216 Germerswang (DE); Templin, Markus, Dr., 49448 Lemförde (DE)

(56) Entgegenhaltungen:
- EP-A- 1 063 249
- DE-A- 4 337 012
- US-A- 6 107 355
- DATABASE WPI Week 8742 Derwent Publications Ltd., London, GB; AN 1987-296761 XP002249155 "Rigid semi-finished product for modular pelvic prosthesis" & RO 90 727 A (INST EXPERT MEDICAL), 29. November 1986 (1986-11-29)
- DATABASE WPI Week 8730 Derwent Publications Ltd., London, GB; AN 1987-209331 XP002249156 "Manufacturing semi-rigid urethane foams with integral skins" & JP 62 135511 A (SANYO CHEM IND), 18. Juni 1987 (1987-06-18)
- DATABASE WPI Week 9642 Derwent Publications Ltd., London, GB; AN 1996-423675 XP002249157 "Composition for integral semi-rigid polyurethane foam" & RU 2 051 927 A (POLIPLAST RES PRODN FIRM), 10. Januar 1996 (1996-01-10)

## Beschreibung

Die Erfindung betrifft Verfahren zur Herstellung von Polyurethanhalbhartschaumstoffen, bevorzugt mit einer Dichte nach DIN 53 420 von 50 kg/m³ bis 200 kg/m³, durch Umsetzung von (a) Isocyanaten mit (b) gegenüber Isocyanaten reaktiven Verbindungen in Gegenwart von (d) Treibmitteln und gegebenenfalls (c) Katalysatoren und/oder (e) Zusatzstoffe. Des weiteren bezieht sich die Erfindung auf derart erhältliche Polyurethanhalbhartschaumstoffe, bevorzugt Polyurethanhalbhartschaumstoffe mit einer Dichte nach DIN 53 420 von 50 kg/m³ bis 200 kg/m³, bevorzugt 80 kg/m³ bis 150 kg/m³, besonders bevorzugt 80 kg/m³ bis 120 kg/m³, einer Zugfestigkeit nach DIN 53 571 von mindestens 100 kPa, bevorzugt mindestens 150 kPa, besonders bevorzugt mindestens 250 kPa, einer Reißdehnung nach DIN 53 571 von mindestens 90 %, wobei besonders bevorzugt nach Wärmealterung über 7 Tage bei 140°C die Zugfestigkeit bevorzugt höchstens 40 % abnimmt, die Reißdehnung höchstens 40 % abnimmt, die Stauchhärte nach DIN 53 577 höchstens 40 % abnimmt und nach Feucht-Wärmealterung nach DIN 53 578, 5 Stunden bei 120°C über drei Zyklen die Zugfestigkeit höchstens 40 % abnimmt, die Reißdehnung höchstens 10 % abnimmt, die Stauchhärte nach DIN 53 577 höchstens 50 % abnimmt, jeweils im Vergleich zu Schaumstoffen ohne Wärmealterung oder Feucht-Wärmealterung, insbesondere Polyurethanhalbhartschaumstoffe enthaltend Polyester und Polymer-MDI, bei denen nach Wärmealterung über 7 Tage bei 140°C die Zugfestigkeit nach DIN 53 571 höchstens 40 % abnimmt, die Reißdehnung nach DIN 53 571 höchstens 40 % abnimmt, die Stauchhärte nach DIN 53 577 höchstens 40 % abnimmt und nach Feucht-Wärmealterung nach DIN 53 578, 5 Stunden bei 120°C über drei Zyklen die Zugfestigkeit nach DIN 53 571 höchstens 40 % abnimmt, die Reißdehnung nach DIN 53 571 höchstens 10 % abnimmt, die Stauchhärte nach DIN 53 577 höchstens 50 % abnimmt, jeweils im Vergleich zu Schaumstoffen ohne Wärmealterung oder Feucht-Wärmealterung. Außerdem betrifft die Erfindung Hinterschäumung von Armaturentafeln, Türseitenverkleidungen, Armauflagen, Bordkanten, Mittelkonsolen, Airbagdeckeln, Handschuhkastendeckeln auf der Basis dieser Polyurethanschaumstoffe.

Polyurethanhalbhartschaumstoffe und ihre Herstellung sind dem Fachmann allgemein bekannt und beispielsweise als Armaturentafeln, Türseitenverkleidungen, Armauflagen, Bordkanten, Mittelkonsolen, Airbagdeckeln, Handschuhkastendeckeln im Einsatz. Eine Definition für Halbhartkunststoffe bzw. Halbhartschaumstoffe ist in der EN ISO 472:2001 oder bevorzugt in der DIN 7726 vom Mai 1982 gegeben. Insbesondere für den Einsatz im Automobilinnenbereich besteht die Forderung, nach Polyurethanschaumstoffen mit hohen mechanische Eigenschaften, um auch für Airbaganwendungen eingesetzt werden zu können. Da im Automobilinnenbereich bei starker Sonneneinstrahlung auch Temperaturen bis zu 120°C auftreten können, müssen die mechanischen Eigenschaften auch unter o.g. Prüfbedingungen ein möglichst hohes Niveau behalten.

Aufgabe der Erfindung war es somit, Polyurethanhalbhartschaumstoffe mit einer verbesserten Dehnung bei gleichzeitig hervorragendem Alterungsverhalten zu entwickeln. Bevorzugt sollten die Schaumstoffe eine Dichte von 50 kg/m³ bis 200 kg/m³, bevorzugt 80 kg/m³ bis 150 kg/m³, besonders bevorzugt 80 kg/m³ bis 120 kg/m³ aufweisen und eine Reißdehnung von mindestens 90 %. Außerdem sollte in einer besonders bevorzugten Ausführungsform das Fogging bzw. VOC- und FOG-Wert sowie der Geruch, d.h. die Abgabe flüchtiger Substanzen aus dem Schaumstoff minimiert werden.

Die Aufgabe konnte durch die eingangs beschriebenen Polyurethanhalbhartschaumstoffe sowie Verfahren zu ihrer Herstellung, die dadurch gekennzeichnet sind, dass man die Umsetzung in Gegenwart mindestens eines Polyesters als gegenüber Isocyanaten reaktive Verbindung (b), durchführt und die Isocyanate Polymer-MDI enthalten, bevorzugt die Isocyanate (a) 1 bis 80 Gew.-%, bevorzugt 5 bis 40 Gew.-%, besonders bevorzugt 10 Gew.-% bis 30 Gew.-%, Polymer-MDI, bezogen auf das Gesamtgewicht der eingesetzten Isocyanate, enthalten, gelöst werden.

Als Polyurethanhalbhartschaumstoffe sind per Definition solche zu verstehen, die bei Druckbeanspruchung einen mittleren Verformungswiderstand aufweisen, z.B. halbharte Schaumstoffe gemäß DIN 7726 vom Mai 1982, insbesondere Halbhartschaumstoffe, die eine Druckspannung bei 10 % Stauchung und/oder Druckfestigkeit nach DIN 53 421 aufweisen von: 15 kPa < δ < 80 kPa.

Als erfindungsgemäße Polyester können beispielsweise Polyester eingesetzt werden, die 0, 1, 2, 3, oder 4 Hydroxylgruppen aufweisen. Polyester ohne Hydroxylgruppe und auch ohne sonstige gegenüber Isocyanaten reaktive Gruppe werden als Zusatzstoffe (e) bezeichnet. Bevorzugt weisen die Polyester eine Funktionalität gegenüber Isocyanaten von 2 bis 3, bevorzugt 2 auf. Bevorzugt entspricht diese Funktionalität der Anzahl an Hydroxylgruppen im Polyester. Die Hydroxylzahl der Polyester betrögt 40 bis 100 KOH/g. Die Polyester basieren bevorzugt auf der Kondensation von Adipinsäure (ADS) und/oder Phthalsäureanhydrid (PSA), bevorzugt ADS, mit Diolen und/oder Triolen mit einem Molekulargewicht von 62 bis 3000 g/mol. Als Diol und/oder Triol können beispielsweise Trimethylolpropan, Neopentylglykol, Polytetrahydrofuran (PTHF), aliphatische Diole mit 2 bis 12 Kohlenstoffatomen, z.B. Ethylenglykol, Propan-1,3-diol, Pentan-1,5-diol, Hexan-1,6-diol, Butan-1,4-diol, Etherdiole und/oder Ethertriole auf Basis von Ethylenoxid und/oder Propylenoxid, z.B. Diethylenglykol, Dipropylenglykol, Triethylenglykol, Tripropylenglykol, Tetraethylenglykol, Tetrapropylenglykol eingesetzt werden. Bevorzugt basiert der Polyesterpolyalkohol auf Hexan-1,6-diol, Butan-1,4-diol und/oder Monoethylenglykol als Alkoholkomponente. Bevorzugt setzt man als erfindungsgemäßen Polyester ein Polyesterpolyol ein, das eine Hydroxylzahl von 40 bis 80 mg KOH/g und eine Funktionalität von 2 aufweist und auf der Kondensation von ADS mit Monoethylenglykol und Butan-1,4-diol basiert. Die Herstellung der Polyester ist dem Fachmann allgemein bekannt und vielfältig beschrieben. Der Polyester wird bevorzugt in einer Menge von 0,5 bis 10 Gew.-%, besonders bevorzugt 0,5 bis 5 Gew.-%, insbesondere 2 bis 3 Gew.-%, bezogen auf das Gesamtgewicht der gegenüber Isocyanaten reaktiven Verbindungen (b) eingesetzt. Die Angaben in dieser Schrift zum Gewicht oder Gesamtgewicht einer Komponente, beispielsweise den Isocyanaten (a) oder den gegenüber Isocyanaten reaktiven Verbindungen (b) beziehen sich unabhängig vom Herstellverfahren, z.B. one-shot- oder Prepölymerverfahren, immer auf die insgesamt zur Herstellung des Schaumstoffes eingesetzten Mengen der jeweiligen Komponente. Wird beispielsweise ein Teil der Komponente (b) zur Herstellung eines Prepolymers eingesetzt und dieses Prepolymer beispielsweise mit weiterer Komponente (b) zum Schaumstoff umgesetzt, so stellt die Summe der Komponente (b) im Prepolymer und zur Umsetzung mit dem Prepolymer das Gesamtgewicht dar.

Durch den Einsatz des erfindungsgemäßen Polyesters konnte insbesondere ein deutlich verbessertes Alterungsverhalten des Schaumstoffes erreicht werden. Diese Verbesserung des Alterungsverhaltens äußert sich insbesondere in der wesentlich geringeren Abnahme der Zugfestigkeit und Reißdehnung und Stauchhärte nach Wärme- und Feucht-Wärme-Alterung.

Die erfindungsgemäß eingesetzten Isocyanate enthalten Polymer-MDI, bevorzugt 1 bis 100 Gew.-%, besonders bevorzugt 5 bis 40 Gew.-%, insbesondere 10 Gew.-% bis 30 Gew.-%, Polymer-MDI, bezogen auf das Gesamtgewicht der eingesetzten Isocyanate. Unter dem Ausdruck "Polymer-MDI" sind Isocyanate definiert, die auch Isocyanate mit mindestens drei Kernen, d.h. aromatische Systeme abgeleitet vom Anilin, enthalten und eine mittlere Funktionalität bezogen auf Isocyanatgruppen von mindestens 2,2, bevorzugt 2,4 bis 2,9 besonders bevorzugt 2,5 bis 2,8 aufweisen. Es handelt sich dabei um dem Fachmann allgemein bekannte höhere Kondensationsstufen, die bei der Herstellung von MDA und MDI anfallen. Neben dem Polymer-MDI können allgemein bekannte (cyclo)aliphatische und/oder insbesondere aromatische Polyisocyanate, bevorzugt Diisocyanate eingesetzt werden, beispielsweise Toluylendiisocyanat (TDI) und/oder bevorzugt 2,2'-, 2,4' und/oder 4,4'-Diphenylmethandiisocyanat (in dieser Schrift auch als MDI bezeichnet). Diese Isocyanate können auch Carbodiimid, Allophanat, Biuret, Uretdion, Isocyanurat enthalten und/oder als Prepolymer vorliegen. Durch den Einsatz des Polymer-MDI konnte insbesondere das Alterungsverhalten der Schaumstoffe erheblich verbessert werden.

Als gegenüber Isocyanaten reaktive Verbindungen (b) können allgemein bekannte gegenüber Isocyanaten reaktive Verbindungen eingesetzt werden, beispielsweise Polyetherpolyalkohöle, auch als Polyetherpolyole oder Polyetherole bezeichnet, Polyesterpolyalkohole und/oder Polycarbonatdiole, bevorzugt Polyetherpolyole und/oder Polyesterpolyalkohole, beispielsweise, so diese gegenüber Isocyanaten reaktive Gruppen aufweisen, die erfindungsgemäßen Polyester. Die Verbindungen der Komponente (b) weisen üblicherweise ein Molekulargewicht von 500 g/mol bis 10000 g/mol, insbesondere 1000 g/mol bis 6000 g/mol sowie bevorzugt eine mittlere Funktionalität gegenüber Isocyanatgruppen von 2 bis 6, besonders bevorzugt 2 bis 3 auf. Bevorzugt werden als (b) Polyetheralkohole mit einer mittleren Funktionalität von 2 bis 3 und einer OH-Zahl von 20 bis 50 mg KOH/g sowie die erfindungsgemäßen, eingangs dargestellten Polyesteralkohole im den eingangs dargestellten, bevorzugten Mengen eingesetzt Polyetherole und ihre Herstellung, beispielsweise durch Alkoxylierung üblicher Startsubstanzen, sind allgemein bekannt.

Des weiteren können die erfindungsgemäßen Verbindungen (b) in Mischung mit Kettenverlängerungs- und/oder Vernetzungsmitteln als gegenüber Isocyanaten reaktive Verbindungen verwendet werden. Bei den Kettenverlängerungsmitteln handelt es sich üblicherweise um 2-funktionelle Alkohole mit Molekulargewichten von 60 g/mol bis 499 g/mol, beispielsweise Ethylenglykol, Propylenglykol, Butandiol-1,4, Pentandiol-1,5. Bei den Vernetzungsmitteln handelt es sich üblicherweise um Verbindungen mit Molekulargewichten von 60 g/mol bis 499 g/mol und 3 oder mehr aktiven H-Atomen, vorzugsweise Aminen und besonders bevorzugt Alkoholen, beispielsweise Glyzerin, Trimethylolpropan und/oder Pentaerythrit. Bevorzugt werden Vernetzungsmittel mit einer Funktionalität gegenüber Isocyanaten von 3 und einer OH-Zahl von größer 900 mg KOH/g, bevorzugt größer 1200 mg KOH/g, besonders bevorzugt größer 1400 mg KOH/g eingesetzt. Der Einsatz dieser Vernetzer erlaubt es, bei niedriger Dichte und ausreichender Härte eine gute Reißdehnung zu erreichen. Bevorzugt werden als Vernetzer Glycerin und/oder Triethanolamin und/oder Trimethylolpropan eingesetzt. Sofern zur Herstellung der Polyurethanschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 1 bis 8 Gew.-%, bezogen auf das Gesamtgewicht der gegenüber den Isocyanaten reaktiven Verbindungen (b) zum Einsatz.

Als Katalysatoren (c) können übliche Verbindungen eingesetzt werden, die beispielsweise die Reaktion der Komponente (a) mit der Komponente (b) stark beschleunigen. In Frage kommen beispielsweise allgemein für diesen Zweck bekannte tertiäre- Amine und/oder organische Metallverbindungen. Bevorzugt werden als Katalysatoren solche eingesetzt, die zu einem möglichst geringen Fogging, d.h. zu einer möglichst geringen Abgabe von flüchtigen Verbindungen aus dem Schaumstoff führen; beispielsweise tertiäre Amine mit mindestens einer funktionellen Hydroxyl-Gruppe.

Die Herstellung der Polyurethanschaumstoffe wird bevorzugt in Abwesenheit von Zinn-haltigen Katalysatoren durchgeführt. Salze von Carbonsäuren, beispielsweise Kaliumacetat, als Katalysatoren (c) werden bevorzugt in einer Menge von kleiner 0,21 Gew.-%, besonders bevorzugt kleiner 0,15 Gew.-%, bezogen auf das Gesamtgewicht der gegenüber Isocyanaten reaktiven Verbindungen (b) eingesetzt. Bevorzugt setzt man als Katalysatoren (c) Verbindungen ein, die gegenüber Isocyanaten reaktiv sind, d.h. beispielsweise eine freie Hydroxyl- und/oder Aminogruppe aufweisen. Derartige Verbindungen sind allgemein bekannt und vielfältig beschrieben. Beispielsweise kommen Dimethylaminopropylamin, N,N,N-Trimethyl-N-hydroxyethyl-bis(aminoethyl)ether, Aminopropylimidazol und/oder 2-Propanol-bis(3-Dimethylaminopropyl)amin in Frage.

Als Treibmittel (d) können zur Herstellung der erfindungsgemäßen Polyurethanschaumstoffe allgemein bekannte chemisch oder physikalisch wirkende Verbindungen eingesetzt werden. Als chemisch wirkendes Treibmittel kann bevorzugt Wasser eingesetzt werden, welches durch Reaktion mit den Isocyanatgruppen Kohlendioxid bildet. Beispiele für physikalische Treibmittel, d.h. solche, inerte Verbindungen, die unter den Bedingungen der Polyurethanbildung verdampfen, sind beispielsweise (cyclo)aliphatische Kohlenwasserstoffe, vorzugsweise solche mit 4 bis 8, besonders bevorzugt 4 bis 6 und insbesondere 5 Kohlenstoffatomen, teilhalogenierte Kohlenwasserstoffe oder Ether, Ketone oder Acetate. Die Menge der eingesetzten Treibmittel richtet sich nach der angestrebten Dichte der Schaumstoffe. Die unterschiedlichen Treibmittel können einzeln oder in beliebigen Mischungen untereinander zum Einsatz kommen.

Als Treibmittel (d) wird bevorzugt Wasser bevorzugt in einer Menge von 1 Gew.-% bis 5 Gew.-%, besonders bevorzugt 1,5 bis 3 Gew.-%, bezogen auf das Gesamtgewicht der gegenüber Isocyanaten reaktiven Verbindungen (b), eingesetzt.

Die Umsetzung erfolgt gegebenenfalls in Anwesenheit von (e) Zusatzstoffen, wie z.B. Füllstoffen, Fasern, z.B. in Form von Geweben und/oder Matten, Zellreglern, oberflächenaktiven Verbindungen und/oder Stabilisatoren gegen Oxidativen, thermischen oder mikrobiellen Abbau oder Alterung. Bevorzugt erfolgt die Herstellung der erfindungsgemäßen Schaumstoffe in Gegenwart allgemein bekannter Emulgatoren, die den erfindungsgemäßen Polyester in dem bevorzugten Polyetherol als Komponente (b) phasenstabil halten.

Die Herstellung der erfindungsgemäßen Polyurethanschaumstoffe, die gegebenenfalls Isocyanaturat- und/oder Harnstoffstrukturen enthalten können, beispielsweise der Weichschaumstoffe, Halbhartschaumstoffe oder Hartschaumstoffe, besonders bevorzugt der Halbhartschaumstoffe kann ansonsten nach allgemein bekannten Verfahren, beispielsweise dem one-shot-Verfahren, mit allgemeinen bekannten Werkzeugen, Formen, Mischvorrichtungen und Dosiereinrichtungen erfolgen. Zur Herstellung der erfindungsgemäßen Produkte können die Isocyanate (a) und die gegenüber Isocyanaten reaktiven Verbindungen (b) und gegebenenfalls (d) in solchen Mengen zur Umsetzung gebracht, dass das Äquivalenzverhältnis von NCO-Gruppen von (a) zur Summe der reaktiven Wasserstoffatome von (b) und gegebenenfalls (d) bevorzugt 0,3 bis 1,8:1, besonders bevorzugt 0,4 bis 1,0:1 und insbesondere 0,4 bis 0,7:1, beträgt. Die Umsetzung zum Produkt kann beispielsweise durch Handguss, durch Hochdruck- oder Niederdruckmaschinen, oder durch RIM-Verfahren (reaction-injection-molding) üblicherweise in geschlossenen oder bevorzugt offenen Formwerkzeugen durchgeführt werden. Geeignete Verarbeitungsmaschinen sind handelsüblich erhältlich (Z.B. Fa. Elastogran, Isotherm, Hennecke, Kraus Maffei u.a.). Die Ausgangskomponenten werden üblicherweise in Abhängigkeit vom Anwendungsfall bei einer Temperatur von 0 bis 100°C, vorzugsweise von 20 bis 80°C, gemischt und beispielsweise in das Formwerkzeug eingebracht. Die Vermischung kann, wie bereits dargelegt wurde, mechanisch mittels eines Rührers oder einer Rührschnecke durchgeführt werden, oder kann in einem üblichen Hochdruckmischkopf erfolgen. Die Umsetzung des Reaktionsgemisches kann beispielsweise in üblichen, bevorzugt temperierbaren und verschließbaren, Form durchgeführt werden. Als Formwerkzeuge zur Herstellung der Produkte können übliche und kommerziell erhältliche Werkzeuge eingesetzt werden, deren Oberfläche beispielsweise aus Stahl, Aluminium, Emaille, Teflon, Epoxyharz oder einem anderen polymeren Werkstoff besteht, wobei die Oberfläche gegebenenfalls verchromt, beispielsweise hartverchromt sein kann. Bevorzugt sollten die Formwerkzeuge temperierbar, um die bevorzugten Temperaturen einstellen zu können, verschließbar und bevorzugt zur Ausübung eines Druckes auf das Produkt ausgerüstet sein. Die Umsetzung zu den Polyurethanschaumstoffen erfolgt üblicherweise bei einer Formtemperatur, bevorzugt auch einer Temperatur der Ausgangskomponenten, von 20 bis 220°C, bevorzugt 30 bis 120°C, besonders bevorzugt 35 bis 80°C, für eine Dauer von üblicherweise 0,5 bis 30 min, bevorzugt 1 bis 5 min. Als vorteilhaft hat es sich erwiesen, die Polyurethanschaumstoffe nach dem Zweikomponentenverfahren herzustellen und die gegenüber Isocyanaten reaktiven Verbindungen (b) und gegebenenfalls die Katalysatoren, Treibmittel und/oder Zusatzstoffe in der A-Komponente zu vereinigen und als B-Komponente die Isocyanate (a) und gegebenenfalls Katalysatoren und/oder Treibmittel einzusetzen.

Die erfindungsgemäßen Polyurethanschaumstoffe können auch in Verbundelementen mit thermoplastischen Kunststoffen, beispielsweise Polyphenylenoxid (PPO), Polyvinylchlorid (PVC), Acrylnitril-Butadien-Styrol (ABS), Polymethylmethacrylat (PMMA), Acrylnitril-Styrol-Acrylester (ASA), Polycarbonat (PC), thermoplastisches Polyurethan (TPU), Polyethylen, Polypropylen eingesetzt werden. Bevorzugt enthalten die Verbundelemente thermoplastische Polyolefin-Folie (TPO) wie Polyethylen und/oder Polypropylen, Polyvinylchlorid (PVC), Styrolmaleinsäureanhydrid (SMA) und/oder ein Polycarbonat/Styrol-Acrylnitril/Acrylnitril-Butadien Blend (PC/ABS).

Die Erfindung soll anhand der folgenden Beispiele dargestellt werden:

### Beispiele

Im folgenden Beispiel sind Rezeptur-Beispiele für den Einsatz als Hinterschäumung von Armaturentafeln oder Airbagdeckeln erläutert.

### Ausgangsstoffe:

- Polyol A:: Polyetherpolyol mit OH-Zahl 28 mgKOH/g, PO/EO Gewichtsverhältnis 86:14, mittlere Funktionalität 2,7
- Polyol B:: Polyesterpolyol mit OH-Zahl 56 mgKOH/g, Funktionalität 2,0
- Polyol C:: Graftpolyol mit OH-Zahl 20 mgKOH/g
- PMDI:: Polymer-MDI mit einer mittleren Funktionalität 2,8 und NCO-Gehalt 31,4
- Isocyanat A:: Basis MDI mit Funktionalität 2,1 und NCO-Gehalt 26
- PP 50:: Perstorp Polyol mit OH-Zahl 630 und Funktionalität 4
- DBTDL:: Dibutylzinndilaurat
- Jeffcat® ZR50:: gegenüber Isocyanat reaktiver Amin-Katalyator der Firma Huntsman
- Jeffcat® ZF10:: gegenüber Isocyanat reaktiver Amin-Katalysator der Firma Huntsman

Die Rezepturen der Beispiele 1 bis 3 sind in nachstehender Tabelle 1, die mechanischen Eigenschaften vor und nach Alterung in Tabelle 2 zusammengefasst:

**Tabelle 1**

| | Beispiel 1 | Beispiel 2 | Beispiel 3 |
|---|---|---|---|
| Polyol-Komponente | | | |
| Polyol A | 79,98 | 91,75 | 91,7 |
| Polyol B | | 1 | 2,5 |
| Polyol C | 15 | | |
| Butan-1,4-diol | 2,0 | | 2,0 |
| Triethanolamin | 0,5 | | 0,5 |
| PP 50 | | 4,0 | |
| Wasser | 2,0 | 2,5 | 2,0 |
| Kaliumacetat 25 % in EG | 0,5 | | |
| DBTDL | 0,02 | | |
| Jeffcat ZR50 | | | 0,8 |
| Jeffcat ZF10 | | 0,25 | |
| Emulgator | | 0,5 | 0,5 |
| | | | |

| Iso-Komponente | | | |
|---|---|---|---|
| Isocyanat A | 100 | | 85 |
| PMDI | | 100 | 15 |
| | | | |
| MV 100: | 50 | 45 | 52 |
| Raumgewicht [kg/m³] | 200 | 120 | 200 |

**Tabelle 2**

| | Beispiel 1 | Beispiel 2 | Beispiel 3 |
|---|---|---|---|
| Zugfestigkeit [kPa] | 780 | 160 | 790 |
| Änderung nach WA [%] | -60 | -31 | -12 |
| Änderung nach FWA [%] | -83 | -19 | -20 |
| Reißdehnung [%] | 141 | 43 | 90 |
| Änderung nach WA [%] | -51 | -9 | +12 |
| Änderung nach FWA [%] | -57 | +30 | +108 |
| Stauchhärte (40 %) [kPa] | 87,4 | 35 | 141 |
| Änderung nach WA [%] | -29 | -20 | -28 |
| Änderung nach FWA [%] | -65 | -40 | -50 |
| WA = Wärmealterung, FWA = Feucht-Wärmealterung | | | |

Im Vergleichsbeispiel 1 werden die Alterungswerte der Zugfestigkeit, Reißdehnung und der Stauchhärte (FWA) nicht erfüllt. Dies ist durch die Abwesenheit des Polyester und der Verwendung von Isocyanat ohne Polymer-MDI-Gehalt zu erklären. Die gewünschten Alterungswerte wurden im Beispiel 2 und 3 durch die Anwesenheit des Polyesters erreicht. Erst durch die Abstimmung der erfindungsgemäßen Isocyanatkomponente und der Anwesenheit des Esters lässt sich ein System herstellen, das den Ansprüchen genügt (Beispiele 2 und 3). Im Beispiel 2 liegt der Wert der Reißdehnung mit 43 % niedrig. Durch den Einsatz des bevorzugten Vernetzers im Beispiel 3 konnte auch dieser Parameter optimiert werden.

## Patentansprüche

1. Verfahren zur Herstellung von Polyurethanhalbhartschaumstoffen durch Umsetzung von (a) Isocyanaten mit (b) gegenüber Isocyanaten reaktiven Verbindungen in Gegenwart von (d) Treibmitteln und gegebenenfalls (c) Katalysatoren und/oder (e) Zusatzstoffe, **dadurch gekennzeichnet, dass** man die Umsetzung in Gegenwart mindestens eines Polyesters mit einer Hydroxylzahl von 40 bis 100 mg KOH/g als (b) durchführt und die Isocyanate (a) Polymer-MDI enthalten und dass man als (b) Polyetheralkohole mit einer mittleren Funktionalität von 2 bis 3 und einer OH-Zahl von 20 bis 50 mg KOH/g und Vernetzer mit einer Funktionalität gegenüber Isocyanaten von 3 und einer OH-Zahl von größer 900 mgKOH/g setzt.

2. Verfahren gemäß Anspruch 1, **dadurch gekennzeichnet, dass** man Salze von Carbonsäuren als Katalysatoren (c) in einer Menge von kleiner 0,21 Gew.-% bezogen auf das Gesamtgewicht der gegenüber Isocyanaten reaktiven Verbindungen (b) einsetzt.

3. Verfahren gemäß Anspruch 1, **dadurch gekennzeichnet, dass** man als Katalysatoren (c) Verbindungen einsetzt, die gegenüber Isocyanaten reaktiv sind.

4. Verfahren gemäß Anspruch 1, **dadurch gekennzeichnet, dass** man als Treibmittel (d) Wasser in einer Menge von 1 Gew.-% bis 5 Gew.-%, bezogen auf das Gesamtgewicht der gegenüber Isocyanaten reaktiven Verbindungen (b), einsetzt.

5. Verfahren gemäß Anspruch 1, **dadurch gekennzeichnet, dass** der Polyurethanhalbhartschaumstoff eine Dichte von 50 kg/m³ bis 200 kg/m³ aufweist.

6. Polyurethanhalbhartschaumstoffe erhältlich durch ein Verfahren gemäß einem der Ansprüche 1 bis 5.

7. Polyurethanhalbhartschaumstoffe gemäß Anspruch 6 mit einer Dichte nach DIN 53 420 von 50 kg/m³ bis 200 kg/m³, einer Zugfestigkeit nach DIN 53 571 von mindestens 100 kPa, einer Reißdehnung nach DIN 53 571 von mindestens 90 %.

8. Polyurethanhalbhartschaumstoffe enthaltend Polyester und Polymer-MDI,(b) Polyetheralkohole mit einer mittleren Funktionalität von 2 bis 3 und einer OH-Zahl von 20 bis 50 mg KOH/g und Vernetzer mit einer Funktionalität gegenüber Isocyanaten von 3 und einer OH-Zahl von größer 900 mgKOH/g bei denen nach Wärmealterung über 7 Tage bei 140°C die Zugfestigkeit nach DIN 53 571 höchstens 40 % abnimmt, die Reißdehnung nach DIN 53 571 höchstens 40 % abnimmt, die Stauchhärte nach DIN 53 577 höchstens 40 % abnimmt und nach Feucht-Wärmealterung nach DIN 53 578, 5 Stunden bei 120°C über drei Zyklen die Zugfestigkeit nach DIN 53 571 höchstens 40 % abnimmt, die Reißdehnung nach DIN 53 571 höchstens 10 % abnimmt, die Stauchhärte nach DIN 53 577 höchstens 50 % abnimmt, jeweils im Vergleich zu Schaumstoffen ohne Wärmealterung oder Feucht-Wärmealterung.

9. Hinterschäumung von Armaturentafeln, Türseitenverkleidungen, Armauflagen, Bordkanten, Mittelkonsolen, Airbagdeckeln, Handschuhkastendeckeln auf der Basis von Polyurethanschaumstoffen gemäß einem der Ansprüche 6 bis 8.

## Claims

1. A process for the preparation of semirigid polyurethane foams by reacting (a) isocyanates with (b) compounds reactive toward isocyanates, in the presence of (d) blowing agents and, if required, (c) catalysts and/or (e) additives, wherein the reaction is carried out in the presence of at least one polyester with a hydroxyl number of 40 to 100 mg KOH/g as (b) and the isocyanates (a) comprise polymer MDI and wherein polyether alcohols having an average functionality of 2 to 3 and an OH number of 20 to 50 mg KOH/g and crosslinking agents having a functionality, with respect to isocyanates, of 3 and an OH number greater than 900 mg KOH/g are used as (b).

2. A process as claimed in claim 1, wherein salts of carboxylic acids are used as catalysts (c) in an amount of less than 0.21% by weight, based on the total weight of the compounds (b) reactive toward isocyanates.

3. A process as claimed in claim 1, wherein compounds which are reactive toward isocyanates are used as catalysts (c).

4. A process as claimed in claim 1, wherein water in an amount of from 1 to 5% by weight, based on the total weight of the compounds (b) reactive toward isocyanates, is used as blowing agent (d).

5. A process as claimed in claim 1, wherein the semirigid polyurethane foam has a density of from 50 to 200 kg/m³.

6. A semirigid polyurethane foam obtainable by a process as claimed in any of claims 1 to 5.

7. A semirigid polyurethane foam as claimed in claim 6, having a density according to DIN 53 420 of from 50 to 200 kg/m³, a tensile strength according to DIN 53 571 of at least 100 kPa and an elongation at break according to DIN 53 571 of at least 90%.

8. A semirigid polyurethane foam comprising polyester and polymer MDI, (b) polyether alcohols having an average functionality of 2 to 3 and an OH number of 20 to 50 mg KOH/g and crosslinking agents having a functionality, with respect to isocyanates, of 3 and an OH number greater than 900 mg/KOH/g, in which, after heat aging over 7 days at 140°C, the tensile strength according to DIN 53 571 decreases by not more than 40%, the elongation at break according to DIN 53 571 decreases by not more than 40%, and the compressive strength according to DIN 53 577 decreases by not more than 40% and, after aging under humid and warm conditions according to DIN 53 578, for 5 hours at 120°C over three cycles, the tensile strength according to DIN 53 571 decreases by not more than 40%, the elongation at break according to DIN 53 571 decreases by not more than 10% and the compressive strength according to DIN 53 577 decreases by not more than 50%, in each case in comparison with foams not subjected to heat aging or to aging under humid and warm conditions.

9. A foam backing for dashboards, door panel trims, arm rests, sill lines, center consoles, airbag covers or glove compartment covers, based on a polyurethane foam as claimed in any of claims 6 to 8.

## Revendications

1. Procédé de préparation de mousses semi-rigides de polyuréthanne par réaction (a) d'isocyanates avec (b) des composés réactifs vis-à-vis des isocyanates, en présence (d) d'agents moussants et éventuellement (c) de catalyseurs et/ou (e) d'additifs, **caractérisé en ce qu'**on effectue la réaction en présence d'au moins un polyester présentant un indice d'hydroxyle de 40 à 100 mg de KOH/g comme (b), les isocyanates (a) contenant des MDI polymères et **en ce que**, comme (b), on utilise des polyétheralcools ayant une fonctionnalité moyenne de 2 à 3 et un indice de OH de 20 à 50 mg de KOH/g et des agents de réticulation ayant une fonctionnalité vis-à-vis des isocyanates de 3 et un indice de OH supérieur à 900 mg de KOH/g.

2. Procédé suivant la revendication 1, **caractérisé en ce que**, comme catalyseurs (c), on met en oeuvre des sels d'acides carboxyliques en une quantité inférieure à 0,21 % en poids par rapport au poids total des composés réactifs vis-à-vis des isocyanates (b).

3. Procédé suivant la revendication 1, **caractérisé en ce que**, comme catalyseurs (c), on met en oeuvre des composés qui sont réactifs vis-à-vis des isocyanates.

4. Procédé suivant la revendication 1, **caractérisé en ce que**, comme agents moussants (d), on met en oeuvre de l'eau en une quantité de 1 % en poids à 5 % en poids, par rapport au poids total des composés réactifs vis-à-vis des isocyanates (b).

5. Procédé suivant la revendication 1, **caractérisé en ce que** la mousse semi-rigide de polyuréthanne présente une densité de 50 kg/m³ à 200 kg/m³.

6. Mousses semi-rigides de polyuréthanne que l'on peut obtenir par un procédé suivant l'une des revendications 1 à 5.

7. Mousses semi-rigides de polyuréthanne suivant la revendication 6, présentant une densité selon la norme DIN 53 420 de 50 kg/m³ à 200 kg/m³, une résistance à la traction selon la norme DIN 53 571 d'au moins 100 kPa, un allongement à la rupture selon la norme DIN 53 571 d'au moins 90 %.

8. Mousses semi-rigides de polyuréthanne contenant des polyesters et des MDI polymères, (b) des polyétheralcools ayant une fonctionnalité moyenne de 2 à 3 et un indice de OH de 20 à 50 mg de KOH/g et des agents de réticulation ayant une fonctionnalité vis-à-vis des isocyanates de 3 et un indice de OH supérieur à 900 mg de KOH/g pour lesquelles, après un vieillissement à la chaleur pendant 7 jours à 140°C la résistance à la traction selon la norme DIN 53 571 diminue au maximum de 40 %, l'allongement à la rupture selon la norme DIN 53 571 diminue au maximum de 40 %, la résistance à l'écrasement selon la norme DIN 53 577 diminue au maximum de 40 % et, après un vieillissement à l'humidité et à la chaleur selon la norme DIN 53 578 pendant 5 heures à 120°C sur trois cycles, la résistance à la traction selon la norme DIN 53 571 diminue au maximum de 40 %, l'allongement à la rupture selon la norme DIN 53 571 diminue au maximum de 10 %, la résistance à l'écrasement selon la norme DIN 53 577 diminue au maximum de 50 %, chaque fois en comparaison de mousses sans vieillissement à la chaleur ou à l'humidité et à la chaleur.

9. Moussage arrière de pupitres de conduite, d'habillages latéraux de portes, d'appuis-bras, de rebords, de consoles centrales, de couvercles pour coussins à air, de couvercles de boîtes à gants à base de mousses de polyuréthanne suivant l'une des revendications 6 à 8.
